# EUROPÄISCHE PATENTSCHRIFT

(11) **EP 2 181 124 B1**
(45) Veröffentlichungstag und Bekanntmachung des Hinweises auf die Patenterteilung: **23.02.2011**
(21) Anmeldenummer: 08787078.8
(22) Anmeldetag: 11.08.2008
(51) Int. Cl.: C08F 2/22, C08F 2/00, C08F 6/00, G21C 1/04, G21C 1/32, B01F 5/06, F28F 13/00, C08F 210/02, C08F 218/04

(54) **VERFAHREN ZUR HERSTELLUNG VON SCHUTZKOLLOID-STABILISIERTEN POLYMERISATEN**
METHOD FOR THE PRODUCTION OF PROTECTIVE COLLOID-STABILIZED POLYMER PRODUCTS
PROCÉDÉ DE PRODUCTION DE POLYMÈRES STABILISÉS PAR COLLOÏDE PROTECTEUR

(30) Priorität: 29.08.2007 DE 102007040850
(43) Veröffentlichungstag der Anmeldung: 05.05.2010
(73) Patentinhaber: Wacker Chemie AG, 81737 München (DE)
(72) Erfinder: WEITZEL, Hans-Peter, 84571 Reischach (DE); GÜNALTAY, Mehmet, 84547 Emmerting (DE); SELIG, Manfred, 84489 Burghausen (DE)
(74) Vertreter: Schuderer, Michael
(86) Internationale Anmeldenummer: PCT/EP2008/060503
(87) Internationale Veröffentlichungsnummer: WO 2009/027212

(56) Entgegenhaltungen:
- EP-A- 1 067 147
- EP-A- 1 174 445
- EP-A- 1 384 502
- US-A1- 2001 012 235

## Beschreibung

Die Erfindung betrifft ein Verfahren zur Herstellung von Schutzkolloid-stabilisierten Polymerisaten mittels Emulsionspolymerisation in einem Reaktor mit einem externen Kühlkreislauf, welcher mit einer Pumpe und einem Wärmetauscher ausgerüstet ist.

Schutzkolloid-stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel, für die unterschiedlichsten Substrate eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit (z.B. Haftzugswerte im Fliesenkleber) beiträgt. Als Monomere zur Herstellung von redispergierbaren Pulvern werden bisher bevorzugt Vinylester und Ethylen eingesetzt, da die Stabilisierung von Acrylatcopolymeren bzw. Styrolacrylatcopolymeren durch Polyvinylalkohol nicht einfach zu bewerkstelligen ist.

Die Herstellung dieser Dispersionen erfolgt traditionell durch Emulsionspolymerisation im Batch- oder Chargenverfahren. Diese Verfahrensweise zeichnet sich durch hohe Flexibilität aus und ist somit vorzugsweise in Anlagen mit großer Produktvielfalt anzutreffen.

Nachteilig ist, dass die bei der Polymerisation erzeugten groβen Energiemengen nur unzureichend durch reaktorinterne Kühlaggregate abgeführt werden können. Bei den reaktorinternen Kühlaggregaten handelt es sich im allgemeinen um einen Doppelmantel, in welchem Kühlmedium den Reaktor umfließt, oder um Kühlschlangen, welche an der Reaktorinnenwand angebracht sind. Durch die mit diesen Einrichtungen bedingte limitierte Wärmeabfuhr resultieren teilweise sehr lange Prozesszeiten, die die Wirtschaftlichkeit des Verfahrens beeinträchtigen. Zur besseren Wärmeabfuhr und Beschleunigung des Prozesses ist es bekannt, die Polymerisation so zu führen, dass das polymerisierende Medium durch einen Kreislauf einem externen Kühler zugeführt wird und von dort wieder in den Reaktor zurückgeführt wird.

In der EP 0 834 518 A1 wird ein Verfahren zur Herstellung von Polymerdispersionen mittels Emulsionspolymerisation und Abfuhr der Polymerisationswärme über einen externen Kühler beschrieben, dadurch gekennzeichnet, dass ein Wärmetauscher mit einem im wesentlichen laminaren Strömungsprofil und eine scherungsarme Pumpe verwendet wird. Das Vorliegen einer laminaren Strömung wird besonders hervorgehoben und dient dazu die Einwirkung von Scherkräften niedrig zu halten. In der WO 03/006510 A2 wird ein ähnliches Verfahren beschrieben, mit dem Unterschied, dass konkret scherungsarm fördernde Zylinder- oder Schlauchmembranpumpen empfohlen werden. In der WO 02/059158 A1 wird ein Verfahren beschrieben, wobei eine Teilmenge des Monomeren direkt in den externen Kreislauf eingeführt wird. Dies soll dazu beitragen weniger Koagulat und Wandbelag zu bilden. Die EP 0 608 567 A1 betrifft ein Verfahren zur Polymerisation von Vinylchlorid in einem Reaktor mit einem externen Kühlkreislauf, welcher mit Wärmetauscher und einer Pumpe ausgerüstet ist, wobei als Pumpe eine Hidrostal-Pumpe mit Schraubenzentrifugalrad eingesetzt wird. Aus der EP 0 526 741 A2 ist ein Reaktorsystem mit externem Kühlkreislauf bekannt, welches durch eine spezielle Pumpe, mit einem Impeller in Form einer Spiralschraube, gekennzeichnet ist. In der DE 199 40 399 wird empfohlen, die Polymerdispersionen mit einer Pumpe mit Flügelrad im Kühlkreislauf zu fördern.

Die EP 1174445 A1 beschreibt eine kontinuierliche Emulsionspolymerisation in mindestens zwei hintereinandergeschalteten Druckreaktoren und anschließend in mindestens einem Drucklosreaktor, welche mittels eines Redoxsystems initiiert wird, und wobei die Reduktionskomponente zumindest teilweise im ersten Druckreaktor zugeführt wird. Die EP 1067147 A2 beschreibt ein kontinuierliches Verfahren zur Emulsionspolymerisation bei dem als Schutzkolloid ein niedermolekularer Polyvinylalkohol eingesetzt wird. Aus der EP 1384502 A1 ist ein statischer Mischer-wärmetauscher bekannt, welcher ein Gehäuse umfasst und darin angeordnete Rohre, welche mit Wärmeübertragungsmedium beschickt werden, wobei die Rohre mit Stegen untereinander verbunden sind, welche die statische Mischung bei Durchleiten eines Substrates durch das Gehäuse bewirken. In der US 2001/0012235 A1 ist ein statischer Mischer aus einem umschließenden Gehäuse und einem Mischereinsatz beschrieben, wobei der Mischereinsatz aus einer Vielzahl von ineinander verschachtelten Gittern besteht. Die EP 0755945 A1 beschreibt eine Vorrichtung, welche einen Rohrreaktor und einen Kreislauf zur teilweisen Rückführung von Polymerisationsprodukt umfasst. In dem Kreislauf sind zwei Mischer-Wärmetauscher angeordnet: Ein ausgangsseitiger, welcher das Polymerisationsprodukt erwärmt, und ein eingangsseitiger, welcher das Polymerisationsprodukt wieder abkühlt. In der WO 00/71319 A1 wird eine Vorrichtung beschrieben, in welcher aus einem Reaktor Produkt entnommen und einem Extruder zugeführt wird, wobei auf der Strecke zwischen Reaktor und Extruder das Produkt in einer Serie aus hintereinandergeschalteten Wärmetauschern gekühlt wird.

Nachteilig ist, dass die üblichen Wärmetauscher (Plattenwärmetauscher, Rohrbündelwärmetauscher, Spiralwärmetauscher) bei vernünftigen Baugrößen nur eine limitierte Wärmeabfuhrkapazität haben. Verursacht wird dies unter anderem dadurch, dass sich mit den zu kühlenden Dispersionen nur eine laminare Strömung einstellt. Um passable Kühlleistungen zu erreichen, ist es daher notwendig mit sehr hohen Flußraten bzw. Leistungen durch den externen Kreislauf zu pumpen. Die dazu notwendigen Hochleistungspumpen können dabei durch Energieeintrag in das Medium zu massiven Schädigungen des Produktes führen.

Aufgabe der vorliegenden Erfindung war es, ein effizienteres Verfahren zur Wärmeabfuhr bei der Emulsionspolymerisation bereitzustellen, ohne die Produkteigenschaften zu beeinträchtigen.

Gegenstand der Erfindung ist ein Verfahren zur Herstellung von Schutzkolloid-stabilisierten Polymerisaten mittels Emulsionspolymerisation in einem Reaktor mit einem externen Kühlkreislauf, welcher mit einer Pumpe und einem Wärmetauscher ausgerüstet ist, dadurch gekennzeichnet, dass das im Reaktor befindliche Reaktionsgemisch mittels einer Pumpe in einen gekühlten, statischen Mischer-Wärmetauscher mit feststehenden Einbauten gefördert wird und anschließend in den Reaktor zurückgeführt wird.

Zur Durchführung des Verfahrens geeignet ist eine Vorrichtung zur Herstellung von Schutzkolloid-stabilisierten Polymerisaten mittels Emulsionspolymerisation umfassend einen Reaktor und einen externen Kühlkreislauf, dadurch gekennzeichnet, dass der externe Kühlkreislauf mit einer Pumpe und einem gekühlten, statischen Mischer-Wärmetauscher mit feststehenden Einbauten ausgerüstet ist.

Geeignete Reaktoren sind entsprechend dimensionierte Stahlreaktoren, welche als Druckreaktoren oder Drucklosreaktoren ausgelegt sein können, und mit den üblichen Rühreinrichtungen, Heiz- und Kühlsystemen, Mess- und Regeleinrichtungen, sowie Leitungen zur Zuführung der Edukte bzw. Abführung der Produkte.

Der externe Kühlkreislauf besteht aus einer entsprechend dimensionierten Rohrleitung, in welche Pumpe und Wärmetauscher integriert sind. Im allgemeinen befindet sich der Anschluß zur Ausleitung des Polymerisationsgemisches in den externen Kühlkreislauf im unteren Drittel des Reaktors, bevorzugt am Boden des Reaktors. Der Anschluß zur Rückführung des Polymerisationsgemisches aus dem externen Kühlkreislauf in den Reaktor befindet sich an einer vom Anschluß zur Ausleitung verschiedenen Stelle, im allgemeinen im oberen Drittel des Reaktors, bevorzugt am Kopf des Reaktors.

Der verwendete Pumpentyp ist unkritisch. Geeignet sind beispielsweise Freistrompumpem (Vortex) oder Verdrängungspumpen. Bevorzugt werden Verdrängungspumpen, besonders bevorzugt sind Schraubenspindelpumpen. Die Pumpe ist vorzugsweise so dimensioniert, dass sie einem Druck von bis zu 100 bar, vorzugsweise 40 bis 100 bar, standhält. Der Stundendurchsatz hängt von der Dimensionierung des Reaktors ab. Im allgemeinen ist der externe Kühlkreislauf so gestaltet, dass die Durchflußrate (Stundendurchsatz) mindestens das doppelte Reaktorvolumen pro Stunde, bevorzugt das 3- bis 10-fache des Reaktorvolumens pro Stunde, am meisten bevorzugt das 4- bis 6-fache des Reaktorvolumens pro Stunde, beträgt. Übliche Werte liegen im Bereich von 50 bis 400 m³/h, bevorzugt 150 bis 300 m³/h.

Der statische Mischer umfasst im allgemeinen ein rohrartiges Gehäuse, welches mit mindestens einem darin angeordneten Mischeinsatz ausgerüstet ist, beispielsweise in Form von einer oder mehreren, Stege und Schlitze, aufweisenden Platten. Dabei erstrecken sich jeweils die Stege der einen Platte durch die Schlitze der anderen Platte kreuzend hindurch. Vorzugsweise sind die Platten zueinander und zur Achse des Rohres geneigt angeordnet. Zur Kühlung kann das rohrartige Gehäuse mit einem Doppelmantel ausgerüstet sein. Das mit den Mischelementen ausgestattete Strömungsrohr kann alternativ dazu oder zusätzlich zur Kühlung auch mit einem innen angeordneten Rohrbündel ausgerüstet werden. Geeignete statische Mischer-Wärmetauscher sind im Handel erhältlich, beispielsweise solche vom Typ CES-XR der Firma Fluitec.

Die Dimensionierung des statischen Mischer-Wärmetauschers hängt im wesentlichen von der Größe des Polymerisationsreaktors ab. Im allgemeinen sollte die Kühlleistung ≥ 50 KW / m³ Reaktorvolumen betragen. Bevorzugt sollte die Kühlleistung ≥ 75 KW / m³ Reaktorvolumen, besonders bevorzugt 75 bis 100 KW / m³ Reaktorvolumen betragen.

Der statische Mischer-Wärmetauscher zeichnet sich dadurch aus, dass mittels der Mischeinbauten für Quervermischung und ständige Oberflächenerneuerung gesorgt wird. Dies erlaubt insbesondere für laminare Strömungen eine sehr gute Wärmeübertragung. Überraschend ist, dass trotz der Einbauten keine Produktschädigungen bzw. Koagulationen der Polymerdispersion beobachtet werden. Die erheblich bessere Wärmeabfuhr im Vergleich zu einfachen Rohrbündelwärmetauschern erlaubt eine deutlich kompaktere Bauweise des Kühlers, was für großindustrielle Anlagen ein wichtiger Punkt ist.

Bei dem Verfahren zur Herstellung von Schutzkolloid-stabilisierten Polymerisaten mittels Emulsionspolymerisation können beliebige ethylenisch ungesättigte Monomere, in wässrigem Medium, in Gegenwart von beliebigen Schutzkolloiden und nach radikalischer Initiierung zur Polymerisation gebracht werden. Als ethylenisch ungesättigte Monomere werden im allgemeinen ein oder mehrere Monomeren aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide eingesetzt. Bevorzugt wird das Verfahren zur Polymerisation von Vinylester, vorzugsweise in Gegenwart von Ethylen, und gegebenenfalls weiteren Comonomeren eingesetzt.

Geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Hexion). Besonders bevorzugt ist Vinylacetat. Die genannten Vinylester werden im allgemeinen in einer Menge von 30 bis 100 Gew.-%, vorzugsweise 30 bis 90 Gew.-%, jeweils bezogen auf das Gesamtgewicht der Monomere, polymerisiert.

Ethylen wird im allgemeinen in einer Menge von 1 bis 40 Gew.-%, bezogen auf das Gesamtgewicht der Monomere, copolymerisiert.

Geeignete weitere Comonomeren sind solche aus der Gruppe der Ester der Acrylsäure oder Methacrylsäure, der Vinylhalogenide wie Vinylchlorid, der Olefine wie Propylen. Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat. Diese Comonomere werden gegebenenfalls in einer Menge von 1 bis 40 Gew.-%, bezogen auf das Gesamtgewicht der Monomere, copolymerisiert.

Gegebenenfalls können noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Comonomergemische von Vinylacetat mit 1 bis 40 Gew.-% Ethylen; sowie
Comonomermischungen von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und
Gemische von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Gemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
sowie Gemische mit Vinylacetat, 1 bis 40 Gew.-% Ethylen und 1 bis 60 Gew.-% Vinylchlorid; wobei
die Gemische noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Polymerisationstemperatur beträgt im allgemeinen 40°C bis 100°C, vorzugsweise 60°C bis 90°C. Die Initiierung der Polymerisation erfolgt mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Bevorzugt werden die Natrium-, Kalium- und Ammoniumsalze der Peroxodischwefelsäure und Wasserstoffperoxid. Die genannten Initiatoren werden im allgemeinen in einer Menge von 0.01 bis 2.0 Gew.-%, bezogen auf das Gesamtgewicht der Monomere, eingesetzt.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und (Iso-)Ascorbinsäure. Die Reduktionsmittelmenge beträgt vorzugsweise 0.015 bis 3 Gew.-%, bezogen auf das Gesamtgewicht der Monomere.

Die genannten Oxidationsmittel, insbesondere die Salze der Peroxodischwefelsäure, können auch alleinig als thermische Initiatoren eingesetzt werden.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind vollverseifte oder teilverseifte Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)-acrylaten mit carboxylfunktionellen Comonomereinheiten, Poly-(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugte Schutzkolloide sind teilverseifte oder vollverseifte Polyvinylalkohole. Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich.

Die Polyvinylalkohole werden im allgemeinen in einer Menge von insgesamt 1 bis 20 Gew.-%, bezogen auf das Gesamtgewicht der Monomere, bei der Polymerisation zugesetzt.

Bei dem erfindungsgemäßen Verfahren wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Monomere können im Reaktor insgesamt vorgelegt oder zudosiert werden. Vorzugsweise wird so vorgegangen, daß 50 bis 100 Gew.-%, insbesondere mehr als 70 Gew.-%, bezogen auf das Gesamtgewicht, der Monomere vorgelegt und der Rest zudosiert wird. Die Dosierungen können separat (räumlich und zeitlich) durchgeführt werden, oder die zu dosierenden Komponenten können alle oder teilweise voremulgiert dosiert werden.

Der Schutzkolloid-Anteil kann im Reaktor sowohl vollständig vorgelegt werden, als auch teilweise dosiert werden. Vorzugsweise werden mindestens 70 Gew.-% des Schutzkolloids vorgelegt, besonders bevorzugt wird der Schutzkolloid-Anteil vollständig vorgelegt.

Die Polymerisation wird vorzugsweise mit einem Redoxsystem aus Oxidations- und Reduktionskomponente initiiert. Der Monomerumsatz wird mit der Initiatordosierung gesteuert. Die Initiatoren werden insgesamt so in den Reaktor zudosiert, dass eine kontinuierliche Polymerisation gewährleistet ist.

Nach Abschluß der Polymerisation im Reaktor kann zur Restmonomerentfernung in Anwendung bekannter Methoden in einem Drucklosreaktor nachpolymerisiert, im allgemeinen durch mit Redoxkatalysator initiierter Nachpolymerisation. In den Drucklosreaktoren werden daher beide Initiatorkomponenten im nötigen Maße für die Endkonfektionierung zugegeben. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%. Zur Herstellung von in Wasser redispergierbaren Polymerpulver können die wässrigen Dispersionen, gegebenenfalls nach Zusatz von Schutzkolloiden als Trocknungshilfe, getrocknet werden, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-%, bezogen auf den Polymeranteil, eingesetzt.

Geeignete Trocknungshilfen sind teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Trocknungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die wässrigen Polymerdispersionen und die in Wasser redispergierbaren, schutzkolloidstabilisierten Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel oder als Beschichtungs- bzw. Bindemittel für Textilien und Papier.

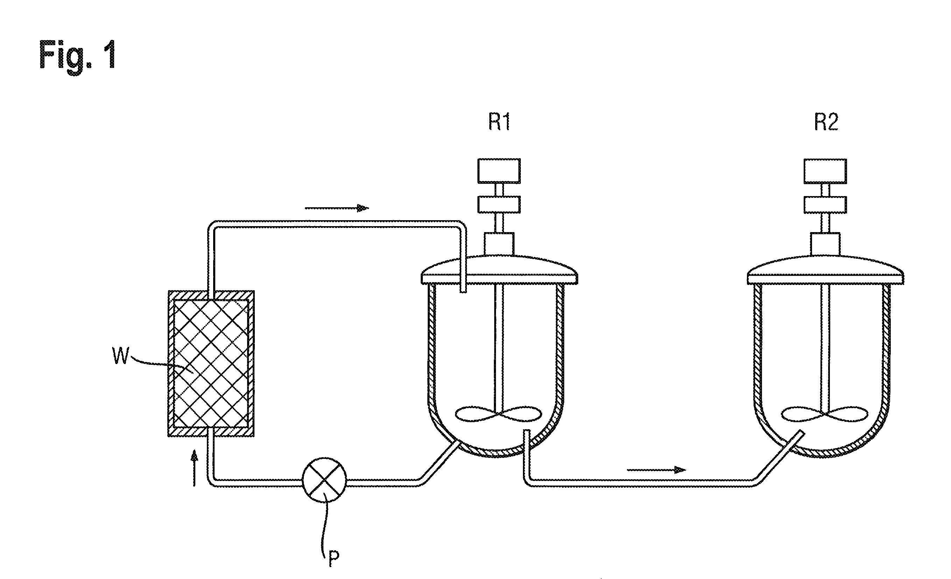

Die nachfolgenden Beispiele dienen der weiteren Erläuterung der Erfindung:
Das Reaktorsystem für das nachfolgende Beispiel ist in Figur 1 dargestellt und umfasst einen Druckreaktor R1 und einem Wärmetauscher W. Der Wärmetauscher ist ein Fluitec-Wärmetauscher CSE-XR mit einer Gesamtlänge von 1.60 m ; das Volumen des Wärmetauschers W beträgt somit ca. 22 Liter. Der Reaktor R1 hat ein Volumen von ca. 590 Liter, einen Rührer und einen kühlbaren Mantel. Die Pumpe P ist eine Exzenterschneckenpumpe. Alle Apparate sind auf einen nutzbaren Druckbereich bis 80 bar ausgelegt. Die Nachbehandlung erfolgt in einem Drucklosreaktor R2.

### Beispiel:

Im Druckreaktor R1 wurden 120 kg entionisiertes Wasser, 92 kg einer 20 %-igen Lösung eines Polyvinylalkohols mit einem Hydrolysegrad von 88 Mol-% und einer Viskosität nach Höppler von 4 mPas, sowie 236 kg Vinylacetat und 19 kg Ethylen vorgelegt.

Der pH-Wert wurde mit 140 g Ameisensäure auf 4.0 eingestellt, und das Gemisch nach Zugabe von 50 ml 10 %-igem Eisenammoniumsulfat auf 55°C aufgeheizt.

Bei Erreichen der Solltemperatur wurden die Initiatordosierungen mit 750 g/h gestartet:
Oxidationsmittel: 3 %-ige Lösung von tert. Butylhydroperoxid
Reduktionsmittel: 5 %-ige Lösung von Natriumhydroxymethansulfinat (Brüggolit)

Mit Beginn der Polymerisation wurde der Reaktorinhalt mit einer Rate von 3 m³/h durch den externen Kreislauf gepumpt. Zeitgleich wurde die Innentemperatur so gesteuert, dass sie sich auf 85°C stabil einstellte.

30 Minuten nach Reaktionsstart wurden nochmals 59 kg Vinylacetat und 29 kg einer 20 %-igen Lösung eines Polyvinylalkohols mit einem Hydrolysegrad von 88 Mol-% und einer Viskosität nach Höppler von 4 mPas innerhalb einer Stunde zudosiert. Außerdem wurden 15 kg Ethylen bei 44 bar nachdosiert. Nach 120 Minuten Laufzeit war die Polymerisation beendet und das Reaktionsgemisch wurde in einen Drucklosreaktor R2 entspannt und überschüssiges Ethylen abgetrennt. Restmonomer wurde durch Zugabe von 2.2 kg 10 %-iges tert-Butylhydroperoxid und 4.4 kg 5 %-iges Natriumhydroxymethansulfinat (Brüggolit)verringert.

Man erhielt eine Dispersion mit einem Feststoffgehalt von 57.5 %, einer Viskosität von 1480 mPas (Brookfield 20 bei 23°C), einem pH-Wert von 3.4, einer Tg von +16°C und einem Teilchengröβendurchmesser Dw von 1120 nm. Das freie Restmonomer betrug 150 ppm.

Es wurde keine nennenswerte Beeinträchtigung der Produktqualität beobachtet.

Der Siebrückstand beim Sieben über 250 µm betrug 180 ppm (mg/kg). Die Dispersion war im Zement stabil.

Die Wärmeabfuhr über den Wärmetauscher betrug etwa 40 KW. Es wurde keine nennenswerte Wandbelagsbildung im Wärmetauscher beobachtet.

### Vergleichsbeispiel:

Es wurde verfahren wie im Beispiel 1, mit dem Unterschied, dass als Wärmetauscher ein traditioneller Röhrenwärmetauscher mit vergleichbarem Volumen verwendet wurde. Die Wärmeabfuhrleistung betrug mit etwa 25 KW nur ca. 60 % des erfindungsgemäß eingesetzten Wärmetauschers. Die Polymerisationszeit verlängerte sich auf 155 Minuten. Der Röhrenwärmetauscher neigte im Lauf der Nutzungszeit (üblicherweise bis zu 50 Chargen) zu deutlicher Wandbelagsbildung, mit entsprechender Reduktion der Kühlleistung.

## Patentansprüche

1. Verfahren zur Herstellung von Schutzkolloid-stabilisierten Polymerisaten mittels Emulsionspolymerisation in einem Reaktor mit einem externen Kühlkreislauf, welcher mit einer Pumpe und einem Wärmetauscher ausgerüstet ist, **dadurch gekennzeichnet, dass** das im Reaktor befindliche Reaktionsgemisch mittels einer Pumpe in einen gekühlten, statischen Mischer-Wärmetauscher mit feststehenden Einbauten gefördert wird und anschließend in den Reaktor zurückgeführt wird.

2. Verfahren nach Anspruch 1, **dadurch gekennzeichnet, dass** der externe Kühlkreislauf so dimensioniert ist, dass die Durchflußrate mindestens das doppelte Reaktorvolumen pro Stunde beträgt.

3. Verfahren nach Anspruch 1 oder 2, **dadurch gekennzeichnet, dass** der statische Mischer-Wärmetauscher so dimensioniert ist, dass dessen Kühlleistung ≥ 50 KW / m³ Reaktorvolumen beträgt.

4. Verfahren nach Anspruch 1 bis 3, **dadurch gekennzeichnet, dass** ein oder mehrere ethylenisch ungesättigte Monomere aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide polymerisiert werden.

5. Verfahren nach Anspruch 1 bis 4, **dadurch gekennzeichnet, dass** ein oder mehrere Vinylester, von unverzweigten oder verzweigten Alkylcarbonsäuren mit 1 bis 15 C-Atomen, mit Ethylen copolymerisiert werden.

6. Verfahren nach Anspruch 1 bis 4, **dadurch gekennzeichnet, dass** ein oder mehrere Vinylester, von unverzweigten oder verzweigten Alkylcarbonsäuren mit 1 bis 15 C-Atomen, in einer Menge von 30 bis 90 Gew.-%, Ethylen in einer Menge von 1 bis 40 Gew.-%, jeweils bezogen auf das Gesamtgewicht der Monomere, gegebenenfalls mit einem oder mehreren weiteren Comonomeren aus der Gruppe umfassend Ester der Acrylsäure oder Methacrylsäure, der Vinylhalogenide oder der Olefine copolymerisiert werden.

7. Verfahren nach Anspruch 1 bis 6, **dadurch gekennzeichnet, dass** in Gegenwart von teilverseiftem oder vollverseiftem Polyvinylalkohol als Schutzkolloide polymerisiert wird.

8. Verfahren nach Anspruch 1 bis 7, **dadurch gekennzeichnet, dass** die mittels Emuslsionspolymerisation erhaltene wässrige Polymerdispersion zu einem in Wasser redispergierbaren Polymerpulver getrocknet wird.

## Claims

1. Process for producing protective-colloid-stabilized polymers by means of emulsion polymerization in a reactor with an external cooling circuit which has a pump and has a heat exchanger, **characterized in that** the reaction mixture located in the reactor is conveyed by means of a pump into a cooled static mixer-heat exchanger with fixed internals, and is then returned to the reactor.

2. Process according to Claim 1, **characterized in that** the external cooling circuit is dimensioned in such a way that the flow rate is at least twice the reactor volume per hour.

3. Process according to Claim 1 or 2, **characterized in that** the static mixer-heat exchanger is dimensioned in such a way that its cooling rate is ≥ 50 kW/m³ of reactor volume.

4. Process according to any of Claims 1 to 3, **characterized in that** one or more ethylenically unsaturated monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes, and vinyl halides are polymerized.

5. Process according to any of Claims 1 to 4, **characterized in that** one or more vinyl esters of unbranched or branched alkylcarboxylic acids having from 1 to 15 carbon atoms are copolymerized with ethylene.

6. Process according to any of Claims 1 to 4, **characterized in that** one or more vinyl esters of unbranched or branched alkylcarboxylic acids having from 1 to 15 carbon atoms, in an amount of from 30 to 90% by weight, ethylene in an amount of from 1 to 40% by weight, based in each case on the total weight of the monomers, if appropriate with one or more further comonomers from the group consisting of esters of acrylic acid or methacrylic acid, vinyl halides, and olefins are copolymerized.

7. Process according to any of Claims 1 to 6, **characterized in that** a polymerization reaction is carried out in the presence of partially hydrolyzed or completely hydrolyzed polyvinyl alcohol as protective colloid.

8. Process according to any of Claims 1 to 7, **characterized in that** the aqueous polymer dispersion obtained by means of emulsion polymerization is dried to give a water-redispersible polymer powder.

## Revendications

1. Procédé pour la production de polymères stabilisés par des colloïdes protecteurs, par polymérisation en émulsion dans un réacteur comportant un circuit de refroidissement externe qui est muni d'une pompe et d'un échangeur thermique, **caractérisé en ce que** le mélange réactionnel se trouvant dans le réacteur est amené au moyen d'une pompe dans un échangeur thermique-mélangeur statique refroidi, muni d'inserts fixes, et ensuite renvoyé dans le réacteur.

2. Procédé selon la revendication 1, **caractérisé en ce que** les dimensions du circuit de refroidissement externe sont telles que le débit représente au moins deux fois le volume du réacteur par heure.

3. Procédé selon la revendication 1 ou 2, **caractérisé en ce que** les dimensions de l'échangeur thermique-mélangeur statique sont telles que sa puissance de refroidissement est ≥ 50 kW/m³ de volume du réacteur.

4. Procédé selon l'une quelconque des revendications 1 à 3, **caractérisé en ce qu'**on polymérise un ou plusieurs monomères à insaturation éthylénique choisis dans le groupe contenant des esters vinyliques d'acides alkylcarboxyliques ramifiés ou non ramifiés ayant de 1 à 15 atomes de carbone, des esters d'acide méthacrylique et des esters d'acide acrylique d'alcools ayant de 1 à 15 atomes de carbone, des composés vinylaromatiques, des oléfines, des diènes et des halogénures de vinyle.

5. Procédé selon l'une quelconque des revendications 1 à 4, **caractérisé en ce qu'**on copolymérise un ou plusieurs esters vinyliques d'acides alkylcarboxyliques ramifiés ou non ramifiés ayant de 1 à 15 atomes de carbone avec l'éthylène.

6. Procédé selon l'une quelconque des revendications 1 à 4, **caractérisé en ce qu'**on copolymérise un ou plusieurs esters vinyliques d'acides alkylcarboxyliques ramifiés ou non ramifiés ayant de 1 à 15 atomes de carbone, en une quantité de 30 à 90 % en poids, de l'éthylène en une quantité de 1 à 40 % en poids, à chaque fois par rapport au poids total des monomères, éventuellement avec un ou plusieurs autres comonomères choisis dans le groupe comprenant des esters de l'acide acrylique ou de l'acide méthacrylique, des halogénures de vinyle ou des oléfines.

7. Procédé selon l'une quelconque des revendications 1 à 6, **caractérisé en ce qu'**on effectue la polymérisation en présence de poly(alcool vinylique) partiellement saponifié ou totalement saponifié, en tant que colloïdes protecteurs.

8. Procédé selon l'une quelconque des revendications 1 à 7, **caractérisé en ce qu'**on sèche la dispersion aqueuse de polymère, obtenue par polymérisation en émulsion, pour obtenir une poudre de polymère redispersable dans l'eau.
